# EUROPÄISCHE PATENTSCHRIFT

(11) **EP 1 895 864 B1**
(45) Veröffentlichungstag und Bekanntmachung des Hinweises auf die Patenterteilung: **05.08.2009**
(21) Anmeldenummer: 06763316.4
(22) Anmeldetag: 29.05.2006
(51) Int. Cl.: A41D 31/00, B32B 5/26

(54) **SCHUTZBEKLEIDUNG AUS EINER VIERSCHICHTIGEN TEXTILIE**
PROTECTIVE CLOTHING MADE OF A FOUR-LAYERED TEXTILE
VETEMENT DE PROTECTION A BASE DE TEXTILE A QUATRE COUCHES

(30) Priorität: 09.06.2005 DE 102005026622
(43) Veröffentlichungstag der Anmeldung: 12.03.2008
(73) Patentinhaber: Innovatec Microfibre Technology GmbH & Co.KG, 53840 Troisdorf (DE)
(72) Erfinder: FISCHER, Jörg, 45481 Mülheim (DE)
(74) Vertreter: Grundmann, Dirk
(86) Internationale Anmeldenummer: PCT/EP2006/062657
(87) Internationale Veröffentlichungsnummer: WO 2006/131453

(56) Entgegenhaltungen:
- EP-A- 0 690 163
- WO-A-99/25551
- WO-A-03/052188
- US-B1- 6 286 145
- PATENT ABSTRACTS OF JAPAN Bd. 015, Nr. 221 (C-0838), 6. Juni 1991 (1991-06-06) & JP 03 066366 A (UNI CHARM CORP), 22. März 1991 (1991-03-22)

## Beschreibung

Die Erfindung betrifft eine Schutzbekleidung aus einer vierschichtig aufgebauten Textilie, wobei zwei Schichten von einem Spinnvlies gebildet sind, von denen eines die Innenseite der Schutzbekleidung bildet, eine mittlere Schicht ein mikrofeines, hochdichtes aber wasserdampfdurchlässiges Meltblown ist, das derartig hydrophil ausgerüstet ist, dass seine Flüssigkeitsaufnahmefähigkeit ein Vielfaches des eigenen Gewichtes beträgt, und eine Schicht eine mikroporöse Folie ist.

Die Erfindung betrifft darüber hinaus ein Verfahren zum Herstellen einer vierschichtigen Textilie für eine Schutzbekleidung der vorbezeichneten und insbesondere erfingdungsgemäß weitergebildeten Textilie.

Eine gattungsgemäße Schutzbekleidung wird von der DE 10318351.5 beschrieben. Die dort beschriebene Schutzbekleidung besteht aus einer vierlagigen Textilie. Eine innere Lage wird von einem Polypropylen-Spinnvlies gebildet. Auf dieser inneren Lage ist eine mikrofeine, hochdichte aber wasserdampfundurchlässige Meltblownschicht aufgebracht. Auf dieser zweiten Schicht ist eine weitere Polypropylen-Spinnvliesschicht aufgebracht, so dass das hydrophil ausgerüstete Meltblown zwischen zwei Polypropylen-Spinnvliesen liegt. Kleidungsaußenseitig ist eine mikroporöse Folie aus Polypropylen oder Polyethylen vorgesehen. Die mikroporöse Außenschicht macht die Schutzbekleidung flüssigkeits- und insbesondere wasserdicht. Sie ist aber gleichwohl Wasserdampfdurchlässig. Die hydrophile Mittelschicht dient der Aufnahme von Wasserdampf. Sie kann ein Vielfaches ihres Eigengewichtes an Wasserdampf aufnehmen.

Die nicht vorveröffentlichte DE 102004042836 beschreibt eine Schutzbekleidung aus einem dreischichtigen Aufbau, wobei das Meltblown unmittelbar zwischen einem Spinnvlies und einer mikroporösen Folie angeordnet ist.

Aus der EP 0 824 324 B1 ist ein flüssigkeitsverteilendes Kleidungsstück, welches unter einer undurchlässigen Schutzkleidung getragen wird, vorbekannt. Diese Unterbekleidung hat einen mehrschichtigen Aufbau. Unter anderem weist sie einen hydrophil umgewandelten Verstärkungsstoff auf. Darüber hinaus besitzt diese Textilie einen saugfähigen Vliesstoff. Vorgesehen ist ferner ein supersaugfähiger Absorber zur Aufnahme von Flüssigkeit.

Die EP 0 541 206 B1 beschreibt einen Textilverbundstoff, wobei eine innere Textilschicht hydrophil ausgerüstet ist.

Die EP 0 690 163 befasst sich mit einer Schutzkleidung, deren Oberseite und Unterseite aus einem Vlies hergestellt ist. Zwischen den beiden Vliesschichten soll ein Meltblown-Vlies angeordnet sein.

Ausgehend von der eingangs genannten DE 10318351 liegt der Erfindung die Aufgabe zugrunde, den Tragekomfort der Schutzbekleidung und die Fertigung der Textilie zu verbessern.

Gelöst wird die Aufgabe durch die in den Ansprüchen angegebene Erfindung, wobei jeder Anspruch eine eigenständige Lösung der Aufgabe darstellt und jeder Anspruch mit jedwedem anderen Anspruch kombinierbar ist.

Der Anspruch 1 sieht zunächst und im wesentlichen vor, dass sowohl Außenseite als auch Innenseite der Schutzbekleidung jeweils von einem Spinnvlies gebildet werden. Das Meltblown ist dabei unmittelbar angrenzend an das innere Spinnvlies und die mikroporöse Folie unmittelbar angrenzend an das äußere Spinnvlies angeordnet. Das Meltblown ist hochabsorbierend. Es ist in der bewähren Weise derart hydrophil ausgerüstet, dass seine Flüssigkeitsaufnahmefähigkeit ein Vielfaches des eigenen Gewichtes und vorzugsweise mehr als 500 % des eigenen Gewichtes beträgt. Die Faserstärke des Meltblowns beträgt vorzugsweise 0,5 bis 6 µm. Zwischen dem Meltblown und dem Spinnvlies befindet sich eine mikroporöse Folie. Diese mikroporöse Folie ist wasserdampfdurchlässig aber wasserdicht, so dass sie eine Schutzbarriere gegen Flüssigkeiten ausbildet. Vom Körper abgegebene Flüssigkeit bzw. vom Körper abgegebener Wasserdampf kann durch die innenliegende Vliesschicht hindurchdringen. Die Faserstärke dieser Vliesschicht beträgt 10 bis 20 µm, bevorzugt 15 µm. Wasser, das als Dampf oder als Flüssigkeit durch diese Schicht hindurchtritt, wird vom Meltblown aufgesaugt. Die Flüssigkeit wird dort zwischengespeichert. Das Meltlbown ist derart hydrophil ausgerüstet, dass es mehr als 100 %, 200 %, 300 %, 400 %, 500 %, 600 %, 700 % oder 800 % des eigenen Gewichtes an Wasser zwischenspeichern kann.

Das zwischengespeicherte Wasser wird kontrolliert an die Außenumgebung abgegeben. Dies erfolgt durch die mikroporöse Folie hindurch. Die mikroporöse Folie ist außenseitig mit einer Spinnvlieslage beschichtet, wobei auch hier die Faserstärke zwischen 10 µm und 20 µm beträgt und vorzugsweise bei 15 µm liegt. Die hydrophile Ausrüstung des Meltblown geschieht über master batches. Es handelt sich hierbei um ein Additiv in Granulatform, welches dem das Meltblown bildende Granulat beigegeben wird. Bevorzugt handelt es sich hier um langkettige Seifen.

In einer bevorzugten Ausgestaltung der Erfindung bestehen alle Schichten aus dem gleichen Material. Vorzugsweise bestehen alle Schichten aus Polypropylen. Polypropylen besitzt einen verhältnismäßig engen Temperaturbereich, in welchem es zu schmelzen beginnt. Die Schmelztemperatur beträgt etwa 160° ± 2°.

Die Fertigung einer Textilie für die Schutzbekleidung erfolgt vorzugsweise im Wege des Kalandrierens. Dabei werden die vier Lagen, Spinnvlies, hydrophil ausgerüstetes Meltblown aus Mikrofasern, mikroporöse Folie und Spinnvlies aufeinanderliegend einem Walzenkalander zugeführt. Die beiden Walzen des Kalanders sind temperiert. Zumindest eine der beiden Walzen des Kalanders ist auf die Schmelztemperatur, etwa 160°, temperiert. Indem das feine, das Meltblown ausbildende Fasermaterial innen liegt, kann es durch die durch das Spinnvlies hindurchtretende Wärme angeschmolzen werden. Die angeschmolzenen feinen Mikrofasern des Meltblown können so an die mikroporöse Folie anschmelzen. Die vier Lagen können im wesentlichen unverbunden dem Kalander zugeführt werden.

Es ist aber auch möglich, das Meltblown auf das Spinnvlies aufzusprühen. In gleicher Weise kann auch die mikroporöse Folie zunächst mit dem der Außenseite der Schutzkleidung zuzuordnenden Spinnvlies verbunden werden. Diese beiden unterschiedlichen Doppellagen können dann dem Kalander zugeführt werden, wobei dann lediglich die dem Meltblown zugewandte Kalanderwalze auf 160° C temperiert zu werden braucht. Die andere Walze kann kälter sein, sie kann beispielsweise nur eine Temperatur von 120° C besitzen. Es ist aber auch möglich, beide Kalanderwalzen auf derselben Temperatur, die der Schmelztemperatur des Polypropylen entspricht, zu halten.

Die Wasserdampfdurchlässigkeit der mikroporösen Folie kann durch eine Mikroperforierung erreicht werden. Hierzu wird die extrudierte Folie axial oder biaxial gerecht. Zufolge beispielsweise einer Kalziumbicarbonatfüllung entstehen dabei bis 70 % kleine Poren in der Folie, die Wasser nicht durchlassen, wohl aber Wasserdampf.

Das Kalandrierverfahren eignet sich unter anderem deshalb besonders, da die Wärme durch die relativ dicken Fasern des Spinnvlieses hindurchtritt, ohne diese vollständig zu schmelzen. Die Wärme, die das Spinnvlies durchtreten hat, gelangt in das Meltblown, deren relativ dünne Fasern schneller schmelzen, so dass sie sich im Wege eines Anschmelzens mit der mikroporösen Folie verbinden können. Sie können sich bei diesem Vorgang auch mit den relativ dicken Fasern des Spinnvlieses verbinden. Die Temperatur der der mikroporösen Folie zugewandten Walze kann derart gewählt werden, dass sich das dort äußere Spinnvlies im Wege des Anschmelzens der Fasern mit der mikroporösen Folie verbindet.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Schutzbekleidung aus einer vierschichtig aufgebauten Textilie, wobei zwei Schichten von einem Spinnvlies gebildet sind, von denen eines die Innenseite der Schutzbekleidung bildet, eine mittlere Schicht ein mikrofeines, hochdichtes aber wasserdampfdurchlässiges Meltblown ist, das derartig hydrohphil ausgerüstet ist, dass seine Flüssigkeitsaufnahmefähigkeit ein Vielfaches des eigenen Gewichtes beträgt und eine Schicht eine mikroporöse Folie ist, **dadurch gekennzeichnet, dass** auch die Außenseite der Schutzkleidung von einem Spinnvlies gebildet ist, wobei das Meltblown unmittelbar zwischen innerem Spinnvlies und mikroporöser Folie angeordnet ist.

2. Schutzbekleidung nach Anspruch 1 , **dadurch gekennzeichnet, dass** die hydrophile Ausrüstung im Wege einer Granulatbeimischung insbesondere in Form langkettiger Seifen oder der Sprühausrüstung mit einer geeigneten Chemikalie erfolgt.

3. Schutzbekleidung nach einem der vorangehenden Ansprüche , **dadurch gekennzeichnet, dass** die von dem Meltblown aufgenommene Feuchtigkeit kontrolliert über die äußere mikroporöse Folie an die Umgebung abgebbar ist.

4. Schutzbekleidung nach einem der vorangehenden Ansprüche , **dadurch gekennzeichnet, dass** die Flüssigkeitsaufnahmefähigkeit des Meltblown mindestens mehr als 100 %, 200 %, 300 %, 400 %, bevorzugt 500 % des eigenen Gewichtes beträgt.

5. Schutzbekleidung nach einem der vorangehenden Ansprüche , **dadurch gekennzeichnet, dass** alle Schichten aus PP bestehen.

6. Schutzbekleidung nach einem der vorangehenden Ansprüche **dadurch gekennzeichnet, dass** die Faserstärke des Spinnvlieses zwischen 10 und 15 µm beträgt.

7. Schutzbekleidung nach einem der vorangehenden Ansprüche , **dadurch gekennzeichnet, dass** das Meltblown auf das Spinnvlies aufgesprüht ist.

8. Schutzbekleidung nach einem der vorangehenden Ansprüche , **dadurch gekennzeichnet, dass** das Meltblown eine Faserstärke zwischen 2 und 4 µm besitzt.

9. Verfahren zur Herstellung einer vierschichtigen Textilie mit den Lagen:
- Spinnvlies,
- hydrophil ausgerüstetes Meltblown aus Mikrofasern,
- mikroporöse Folie,
- Spinnvlies,
welche aus Polypropylen bestehen, wobei die Lagen bei einer Temperatur von etwa 160° C derart zwischen zwei Walzen kalandriert werden, dass sich das Meltblown mit der mikroporösen Folie durch Anschmelzen der Mikrofasern verbindet.

10. Verfahren nach Anspruch 9 , **dadurch gekennzeichnet, dass** die vier Lagen im wesentlichen unverbunden dem Kalander zugeführt werden.

11. Verfahren nach einem der Ansprüche 9 und 10 , **dadurch gekennzeichnet dass** der Kalander ein Zweiwalzenkalander ist, wobei die Walzen unterschiedliche Temperaturen aufweisen.

12. Verfahren nach einem der Ansprüche 9 bis 11 , **dadurch gekennzeichnet, dass** nur die dem Meltblown zugewandte Walze eine Temperatur von etwa 160° C besitzt und die der mikroporösen Folie zugewandte Walze eine niedrigere Temperatur aufweist.

13. Verfahren nach einem der Ansprüche 9 bis 12 , **dadurch gekennzeichnet, dass** die Faserstärke des Spinnvlieses mindestens 5 mal größer ist als die Faserstärke der Mikrofasern.

## Claims

1. Protective clothing made from a textile formed from four layers, two layers being formed from a spunbonded non-woven, one of which forms the inner side of the protective clothing, a middle layer being a microfine, high-density but water-vapour-permeable meltblown material which is finished so as to be hydrophilic in such a way that the liquid absorption capacity thereof is many times its own weight, and one layer being a microporous film, **characterised in that** the outer side of the protective clothing is formed from a spunbonded non-woven, the meltblown material being arranged directly between the inner spunbonded non-woven and the microporous film.

2. Protective clothing according to claim 1, **characterised in that** the hydrophilic finish is produced by adding granulates in the form of long-chain soaps in particular or by spraying suitable chemicals.

3. Protective clothing according to any one of the preceding claims, **characterised in that** the moisture absorbed by the meltblown material can be released into the environment in a controlled manner via the outer microporous film.

4. Protective clothing according to any one of the preceding claims, **characterised in that** the liquid absorption capacity of the meltblown is at least 100 %, 200%, 300 %, 400 %, and preferably 500 % of its own weight.

5. Protective clothing according to any one of the preceding claims, **characterised in that** all the layers are formed from PP.

6. Protective clothing according to any one of the preceding claims, **characterised in that** the fibre thickness of the spunbonded non-woven is between 10 and 15 µm.

7. Protective clothing according to any one of the preceding claims, **characterised in that** the meltblown material is sprayed onto the spunbonded non-woven.

8. Protective clothing according to any one of the preceding claims, **characterised in that** the fibre thickness of the meltblown material is between 2 and 4 µm.

9. Method of producing a four-layered textile with the following layers:
- spunbonded non-woven,
- microfibre meltblown material with a hydrophilic finish,
- microporous film,
- spunbonded non-woven
which are formed from polypropylene, wherein the layers are calendered between two rollers at a temperature of approximately 160 °C in such a way that the meltblown material is connected to the microporous film by means of the microfibres melting thereon.

10. Method according to claim 9, **characterised in that** the four layers are supplied to the calender in a substantially unconnected manner.

11. Method according to either claim 9 or claim 10, **characterised in that** the calender is a two-roller calender, the rollers being at different temperatures.

12. Method according to any one of claims 9 to 11, **characterised in that** only the roller facing the meltblown material is at a temperature of 160 °C and the roller facing the microporous film is at a lower temperature.

13. Method according to any one of claims 9 to 12, **characterised in that** the fibre thickness of the spunbonded non-woven is at least five times greater than the fibre thickness of the microfibres.

## Revendications

1. Vêtement de protection à base de textiles à structure à quatre couches, dans lequel deux couches sont formées d'un textile non-tissé, dont l'une forme la face intérieure du vêtement de protection, une couche médiane est un textile non-tissé obtenu par un procédé de fusion-soufflage microfin, à haute densité, mais perméable à la vapeur d'eau, auquel on donne un apprêt hydrophile, de sorte que sa capacité d'absorption de liquide soit un multiple de son poids intrinsèque, et une couche est une feuille microporeuse, **caractérisé en ce que** la face extérieure du vêtement de protection est également formé d'un textile non-tissé, le textile non-tissé obtenu par un procédé de fusion-soufflage étant disposé directement entre le textile non-tissé intérieur et la feuille microporeuse.

2. Vêtement de protection selon la revendication 1, **caractérisé en ce que** l'apprêt hydrophile est obtenu par le biais de l'incorporation de granulats, en particulier en forme de savon à chaîne longue, ou par apprêtage par aspersion avec un produit chimique adéquat.

3. Vêtement de protection selon l'une des revendications précédentes, **caractérisé en ce que** l'humidité qui est absorbée par le textile non-tissé obtenu par un procédé de fusion-soufflage est susceptible d'être rendue de façon contrôlée à l'environnement via la feuille microporeuse externe.

4. Vêtement de protection selon l'une des revendications précédentes, **caractérisé en ce que** la capacité d'absorption de liquide du textile non-tissé obtenu par un procédé de fusion soufflage est au moins supérieure à 100 %, 200 %, 300 %, 400 %, de préférence 500 % de son propre poids.

5. Vêtement de protection selon l'une des revendications précédentes, **caractérisé en ce que** toutes les couches sont composées de polypropylène.

6. Vêtement de protection selon l'une des revendications précédentes, **caractérisé en ce que** le calibre des fibres du textile non tissé se situe entre 10 et 15 µm.

7. Vêtement de protection selon l'une des revendications précédentes, **caractérisé en ce que** le textile non-tissé obtenu par un procédé de fusion soufflage est appliqué au textile non-tissé par aspersion.

8. Vêtement de protection selon l'une des revendications précédentes, **caractérisé en ce que** le textile non-tissé obtenu par un procédé de fusion soufflage présente un calibre des fibres d'entre 2 et 4 µm.

9. Procédé de fabrication d'un textile à quatre couches présentant les strates suivantes :
- textile non-tissé,
- textile non-tissé obtenu par un procédé de fusion-soufflage en microfibres avec un apprêt hydrophile,
- feuille microporeuse,
- textile non-tissé,
qui sont composées de polypropylène, les strates étant calandrées entre deux cylindres à une température d'environ 160°C de telle façon que le textile non-tissé obtenu par un procédé de fusion soufflage se lie avec la feuille microporeuse par fusion des microfibres.

10. Procédé selon la revendication 9, **caractérisé en ce que** les quatre strates sont amenées à la calandre sous forme essentiellement non liée.

11. Procédé selon l'une des revendications 9 et 10, **caractérisé en ce que** la calandre est une calandre à deux cylindres, les cylindres présentant des températures différentes.

12. Procédé selon l'une des revendications 9 à 11, **caractérisé en ce qu'**uniquement le cylindre qui fait face au textile non-tissé obtenu par un procédé de fusion soufflage présente une température d'environ 160°C et le cylindre qui fait face à la feuille microporeuse présente une température inférieure.

13. Procédé selon l'une des revendications 9 à 12, **caractérisé en ce que** le calibre de fibre du textile non-tissé est au moins 5 fois supérieur au calibre de fibre des microfibres.
